**Europäisches Patentamt**

**European Patent Office**

**Office européen des brevets**

(11) Veröffentlichungsnummer: **0 585 910 A2**

## (12) EUROPÄISCHE PATENTANMELDUNG

(21) Anmeldenummer: **93114020.6**

(22) Anmeldetag: **02.09.93**

(51) Int. Cl.5: **G01C 9/20**, G01C 9/06

(30) Priorität: **02.09.92 DE 4229191**
**19.07.93 DE 4324082**

(43) Veröffentlichungstag der Anmeldung:
**09.03.94 Patentblatt 94/10**

(84) Benannte Vertragsstaaten:
**DE ES FR GB IT NL SE**

(71) Anmelder: **DODUCO GMBH + Co Dr. Eugen Dürrwächter**
**Im Altgefäll 12**
**D-75181 Pforzheim(DE)**

(72) Erfinder: **Bahm, Klaus**
**Schweizer Strasse 20**
**D-76703 Kraichtal 4(DE)**
Erfinder: **Kühnle, Andreas**
**Diefenbacher Strasse 36**
**D-75438 Knittlingen(DE)**
Erfinder: **Michal, Roland**
**Krähenstrasse 8**
**D-75181 Pforzheim(DE)**
Erfinder: **Normann, Norbert**
**Panoramastrasse 12**
**D-75223 Niefern-Öschelbronn(DE)**
Erfinder: **Schulze, Gunter Lothar**
**Lutherstrasse 3**
**D-75228 Ispringen(DE)**

(74) Vertreter: **Twelmeier, Ulrich, Dipl.Phys. et al**
**Patentanwälte Dr. Rudolf Bauer**
**Dipl.-Ing.Helmut Hubbuch, Dipl.Phys. Ulrich Twelmeier**
**Westliche Karl-Friedrich-Strasse 29-31**
**D-75172 Pforzheim (DE)**

(54) **Neigungssensor.**

(57) Neigungssensor mit zwei einen kapazitiven Spannungsteiler bildenden Kondensatoren (20/21, 20/22, 20/23 20/24), welche durch zwei Paare (20/21, 20/22, 20/23, und 20/24) von Elektroden gebildet sind, deren Relativlage fest vorgegeben ist, in jedem Paar ein Spalt (26, 27; 28, 29) zwischen den Elektroden vorgesehen ist, in welchen sich eine dielektrische Flüssigkeit befindet und die Spalte nach dem Prinzip kommunizierender Röhren miteinander verbunden sind. Der Spannungsteiler ist mit einer Wechselspannungsquelle verbunden, die eine Spannung mit vorgegebener Amplitude $\hat{U}$ liefert. Eine Meßschaltung erfaßt eine Verstimmung des kapazitiven Spannungsteilers.

EP 0 585 910 A2

Rank Xerox (UK) Business Services
(3.10/3.09/3.3.4)

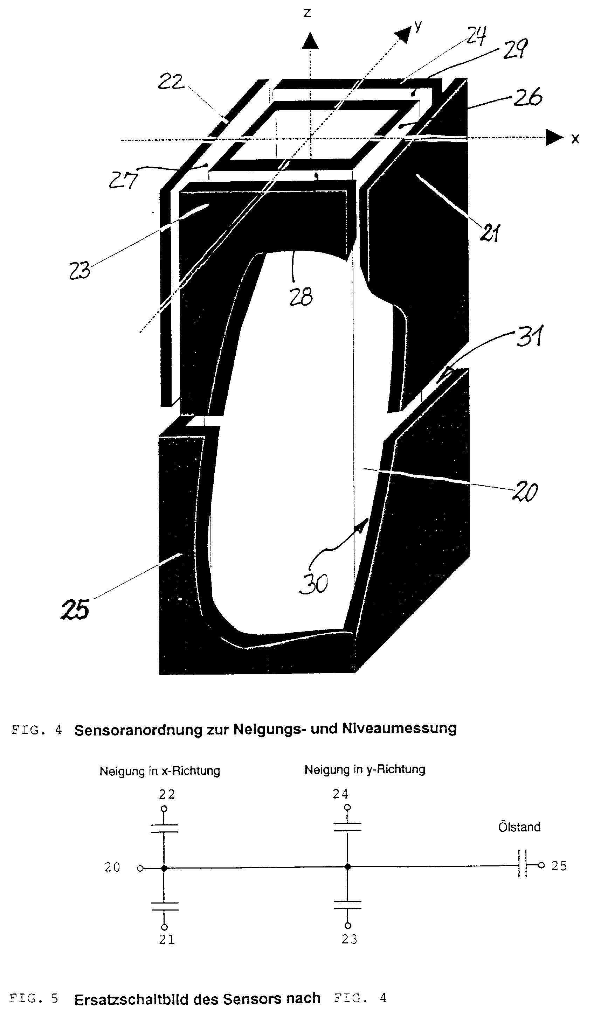

FIG. 4 **Sensoranordnung zur Neigungs- und Niveaumessung**

Die Erfindung befaßt sich mit einem Neigungssensor, insbesondere für Behälter, die eine dielektrische Flüssigkeit enthalten. Um eine dielektrische Flüssigkeit handelt es sich auch bei einem Schmieröl im Antriebsaggregat eines Kraftfahrzeugs. Um dort den Ölstand zu messen, beispielsweise den Ölstand im Verbrennungsmotor oder den Ölstand im Automatikgetriebe, ist es bekannt, einen Ölmeßstab vorzusehen, der in eine Ölkammer des Antriebsaggregates eintaucht. Der Ölmeßstab hat zwei Markierungen für den maximalen und den minimalen Ölstand, wobei der aktuelle Ölstand dadurch ermittelt wird, dass man den Ölmeßstab herauszieht und schaut, bis wohin er benetzt ist. Ein solcher mechanischer Ölmeßstab erlaubt keine kontinuierliche Kontrolle des Ölstandes.

Es ist bekannt, eine kontinuierliche Ölstandskontrolle mit Hilfe eines mechanischen Schwimmers durchzuführen, dessen Lage durch den Ölstand bestimmt und durch einen Lagesensor gemeldet wird. Nachteilig dabei ist, dass der mechanische Schwimmer durch unvermeidliche Verunreinigungen des Öles beeinträchtigt wird, indem sich die Verunreinigungen in der Mechanik des Schwimmers ablagern und dadurch dessen Genauigkeit und Funktionsfähigkeit beeinträchtigen.

Es ist weiterhin bekannt, den Ölstand durch einen elektrischen Sensor in Gestalt eines beheizten Widerstandsdrahtes zu bestimmen, der in das Öl eintaucht. Bei diesem Sensor macht man sich die Temperaturabhängigkeit des elektrischen Widerstands zunutze. Der Sensor wird mit konstanter Heizleistung beheizt und wird umso heißer, je länger der Sensorabschnitt ist, welcher nicht in das Öl eintaucht. Nachteilig dabei ist, dass schwankende Öltemperaturen ebenso in das Meßergebnis eingehen wie Änderungen der Zusammensetzung des Öls im Laufe der Betriebszeit (Alterung).

Aus der DE-OS 16 48 153 ist es bekannt, den Füllstand von dielektrischen Flüssigkeiten wie Helium oder Stickstoff mittels einer kapazitiven Meßbrücke zu bestimmen, die mit Wechselstrom gespeist wird. Dabei liegt in einem Zweig der Brücke ein als Kondensator ausgebildeter Meßfühler mit einer zylindrischen Innenelektrode und einer dazu koaxialen Aussenelektrode, die durch einen dielektrischen Faden, der wendelförmig auf die Innenelektrode gewickelt ist, auf Abstand gehalten werden. Im Zwischenraum zwischen den beiden Elektroden steht die Flüssigkeit bis zu der zu bestimmenden Höhe. Eine Änderung des Füllstandes ändert die Kapazität des Kondensators und bringt die Brückenschaltung aus dem Gleichgewicht; ein etwaiges Ungleichgewicht wird aus der Phasenverschiebung zwischen der die eine Brückendiagonale speisenden Wechselspannung und der an der anderen Brückendiagonale abgegriffenen Wechselspannung bestimmt. Dieser bekannte kapazitive Füllstandsmesser arbeitet zufriedenstellend in Flüssigkeiten, deren dielektrische Eigenschaften sich nicht verändern. Bei Motorölen ist das anders: Sie verändern sich durch Alterung. Ausserdem werden bei einem Ölwechsel häufig andere Ölsorten eingefüllt. Schließlich schwankt auch die Temperatur des Öls in weiten Grenzen. All dies geht mit einer Änderung der dielektrischen Eigenschaften einher und würde eine kapazitive Füllstandsmessung gemäss DE-OS 16 48 153 verfälschen, so dass diese für die Messung des Ölstandes in Automobilen ungeeignet ist.

Um unabhängig von Stoffeigenschaften der dielektrischen Flüssigkeit und um unabhängig von ihrer Temperatur zu sein, ist es bekannt, zwei verschiedene Kondensatoren in die Flüssigkeit eintauchen zu lassen (DE-OS 30 32 155, US-PS 3,901,079), von denen einer als Referenzkondensator dient und andauernd vollständig von der dielektrischen Flüssigkeit geflutet ist, während der andere der eigentliche Meßkondensator ist und in einem vom Füllstand abhängigen Ausmaß mit der dielektrischen Flüssigkeit gefüllt ist.

In Kraftfahrzeugen kommt für die Messung des Ölstandes eine weitere Einflußgröße hinzu, die geeignet ist, das Meßergebnis zu verfälschen, nämlich die variable Neigung des Fahrzeuges. Nach einem unveröffentlichten Vorschlag werden in den Spalt zwischen den beiden Elektroden eines Meßkondensators Schikanen eingebaut, die einen Niveauausgleich der dielektrischen Flüssigkeit im Kondensator verlangsamen. Damit kann man allerdings nur den Einfluß, den ein Hin- und Herschwappen der Flüssigkeit infolge der Fahrzeugbewegung auf die Niveaumessung haben kann, klein halten, aber nicht den systematischen Meßfehler beseitigen, der bei längerer Bergfahrt oder Talfahrt oder beim Abstellen des Fahrzeugs auf geneigtem Untergrund auftritt.

Der vorliegenden Erfindung liegt die Aufgabe zugrunde, einen Sensor zu schaffen, der es erlaubt, die Neigung des Fahrzeugs zu erfassen und bei der Füllstandsbestimmung der dielektrischen Flüssigkeit zu berücksichtigen.

Diese Aufgabe wird gelöst durch einen Sensor mit den im Anspruch 1 angegebenen Merkmalen. Vorteilhafte Weiterbildungen der Erfindung sind Gegenstand der abhängigen Ansprüche.

Der erfindungsgemässe Sensor arbeitet mit zwei Kondensatoren, in welchen die dielektrische Flüssigkeit steht. Bei diesen beiden Kondensatoren handelt es sich aber nicht wie bei einem Füllstandssensor um einen Meßkondensator und einen stets vollständig gefüllten Referenzkondensator, der, damit er über den ganzen Meßbereich gefüllt ist, zweckmässigerweise unterhalb des Meßkondensators liegt; vielmehr werden erfindungsgemäss zwei funktionell gleichberechtigte, in Normallage höhengleich angeordnete Kondensato-

3

ren verwendet, die zwischen ihren Elektroden Spalte haben, die nach dem Prinzip kommunizierender Röhren miteinander verbunden sind. Die beiden Kondensatoren sollen eine fest vorgegebene Relativlage zueinander haben. Wegen der Strömungsverbindung der beiden Kondensatoren miteinander steht die dielektrische Flüssigkeit in beiden stets gleich hoch. Wird die Anordnung aus den beiden Kondensatoren geneigt und dadurch die Höhenlage der beiden Kondensatoren relativ zueinander geändert, dann strömt dielektrische Flüssigkeit aus dem durch das Neigen angehobenen Kondensator herüber in den anderen Kondensator, wodurch sich das Verhältnis ihrer Kapazitäten ändert. Diese Änderung kann ermittelt werden durch eine mit Wechselspannung betriebene Meßbrücke mit zwei Zweigen, deren Enden mit einer Wechselspannungsquelle verbunden sind, die eine Spannung mit vorgegebener Amplitude liefert. In dem einen Zweig der Meßbrücke liegen zwei bekannte Impedanzen und in dem anderen Zweig die beiden Kondensatoren, in welchen die dielektrische Flüssigkeit steht. Durch Ändern der Höhenlage der beiden Kondensatoren wird die Meßbrücke verstimmt, was zum Auftreten einer Spannung in der die beiden Zweige verbindenden Brückendiagonale führt und durch einen in dieser Diagonale liegenden Spannungsaufnehmer erfaßt und einer Auswertung zugeführt werden kann. Die Größe der auftretenden Spannung ist ein Maß für die Verstimmung der Meßbrücke und diese wiederum ein Maß für die aufgetretene Neigung. Das neigungsabhängige Meßsignal kann benutzt werden, um ein gleichzeitig oder in engem zeitlichem Zusammenhang gebildetes Füllstandsmeßsignal rechnerisch um den Einfluß der Neigung zu korrigieren.

Statt die Kondensatoren in eine Meßbrücke einzusetzen, kann man als Maß für eine Änderung der Neigung der Kondensatoranordnung, die sich in einer Änderung des Kapazitätsverhältnisses widerspiegelt, auch den Verschiebestrom messen, der die von der Wechselspannungsquelle erzwungene Ladungsverschiebung beim Umladevorgang der beiden Kondensatoren begleitet, vorzugsweise mittels einer Kompensationsschaltung. Dafür eignet sich besonders eine Meßschaltung mit einem Operationsverstärker, dessen nichtinvertierender Eingang mit einer Referenzspannungsquelle und dessen invertierender Eingang mit dem am Verbindungspunkt zwischen den beiden Kondensatoren liegenden Abgriff verbunden ist. Der Operationsverstärker wird in Strom/Spannungs-Wandler-Beschaltung betrieben, mit Ohmscher Rückkopplung vom Ausgang auf seinen invertierenden Eingang. Liegt der nicht invertierende Eingang des Operationsverstärkers auf Referenzpotential, kompensiert der Strom-Spannungs-Wandler über den Rückkoppelwiderstand die durch das Wechselspannungssignal erzwungene Ladungsverschiebung beim Umladevorgang der Kondensatoren, da auch der invertierende Eingang des Operationsverstärkers auf demselben Referenzpotential gehalten wird. Die Ausgangsspannung des Operationsverstärkers ist ein Maß für den Kompensationsstrom über den Rückkoppelwiderstand in den kapazitiven Spannungsteiler und damit direkt ein Maß für die das Verhältnis der Kapazitäten der Kondensatoren verstimmende Größe (Neigung oder Niveau).

Ein erfindungsgemässer Neigungssensor mit einer Anordnung aus zwei Meßkondensatoren gestattet es, die in einer Richtung auftretende Neigung genau zu erfassen. Berücksichtigt man, dass die bei Kraftfahrzeugen auftretende Neigung meistens eine Längsneigung, aber keine Querneigung ist, dann kann man mit einem solchen Neigungssensor bei entsprechender Orientierung des Sensors in Bezug auf die Fahrtrichtung die Längsneigung erfassen. Will man auch die Querneigung erfassen, dann kann man das einfach dadurch, dass man den Sensor um ein weiteres Paar Kondensatoren ergänzt, deren Elektroden und deren Spalte zwischen den Elektroden dementsprechend unter einem Winkel zu den Elektroden der anderen beiden Kondensatoren auf die zweite Neigungsrichtung ausgerichtet sind. Vorzugsweise verwendet man gleiche Kondensatoren mit gleichen und parallel zueinander angeordneten Elektrodenpaaren und orientiert die beiden Gruppen von Kondensatoren rechtwinklig zueinander, um die Neigung in zwei zueinander senkrechten Richtungen zu erfassen. Die vier Kondensatoren definieren auf diese Weise ein rechtwinkliges Koordinatensystem (X-Y-Koordinaten), in welchem die in einer beliebigen Richtung auftretende Neigung leicht erfaßt werden kann.

Grundsätzlich könnten die beiden Gruppen von je zwei Kondensatoren zwei verschiedenen Meßschaltungen angehören. Einfacher und weniger aufwendig ist es jedoch, wenn man nur eine Meßschaltung, z.B. eine Meßbrücke vorsieht, der alle vier Kondensatoren angehören. Die beiden Gruppen von Kondensatoren kann man abwechselnd (Zeitmultiplex) auf die Meßschaltung schalten und dabei die beiden Kondensatoren mit um 180° phasenverschobenen Wechselspannungen im Gegentakt beaufschlagen.

Eine besonders vorteilhafte Weiterbildung der Erfindung zeichnet sich dadurch aus, dass die Kondensatoren nicht über mechanische Schalter oder Halbleiterschalter angesteuert werden, sondern mit phasenverschobenen Signalen, die aus einer Wechselspannungsquelle stammen, die vier um 90° phasenverschobene, amplitudengleiche Ausgangssignale liefert. Die Wechselspannungsquelle wird in der Weise mit den Kondensatoren verbunden, dass die beiden einer Gruppe angehörenden Kondensatoren im Gegentakt betrieben werden und die beiden anderen Kondensatoren in 90°-Phasenlage dazu. Dadurch entsteht ein zirkular rotierender elektrischer Spannungsvektor (ein Drehfeld) für die Sensoranregung bei der Neigungsmessung; eine Unterscheidung von X-Y-Richtung erübrigt sich, da durch die Ansteuerung mit dem Drehfeld jede beliebige Richtung in der X-Y-Ebene zu einer Änderung des Kapazitätsverhältnisses und damit z.B. zu einer Verstimmung der Meßbrücke und folglich zu einem auswertbaren Signal führt.

Zwar hat der erfindungsgemässe Neigungssensor sein bevorzugtes Anwendungsgebiet bei der Füllstandsmessung von dielektrischen Flüssigkeiten in Fahrzeugen, er kann jedoch auch andernorts eingesetzt werden, wo es ähnliche Meßaufgaben zu bewältigen gilt, z.B. bei der Überwachung von Maschinen und bei einer reinen Schrägstandsüberwachung (von Maschinenteilen, Nutzfahrzeugen, Steigkörben, in der Schiffahrt usw.) ohne Kombination mit einer Füllstandsmessung. Erfindungsgemässe Neigungssensoren könnten auch eingesetzt werden zur Bildung einer elektrischen Wasserwaage oder zur Kontrolle einer Nivellierungsplattform, die mit einem erfindungsgemässen Neigungssensor und einem Regler ausgerüstet ist, der das Ausgangssignal des Neigungssensors als Ist-Signal empfängt und die Plattform nach einer Auslenkung selbsttätig in eine vorbestimmte, insbesondere horizontale Lage zurückführt.

Wird der Neigungssensor nicht in Kombination mit einem Füllstandssensor verwendet, dann müssen die Spalte zwischen den Elektroden in den Kondensatoren, in denen sich die dielektrische Flüssigkeit befindet, nicht von aussen zugänglich sein, sie können ein abgeschlossenes System bilden. In besonders vorteilhafter Weiterbildung der Erfindung kann der Neigungssensor so ergänzt werden, dass er zusätzlich zur Füllstandsmessung eingesetzt werden kann. Dazu wird er lediglich um einen Referenzkondensator ergänzt, welcher so ausgebildet und angeordnet ist, dass er gleichbleibend mit der elektrolytischen Flüssigkeit gefüllt ist, und die für die Neigungsmessung vorgesehenen Kondensatoren werden so ausgebildet, dass die Spalte zwischen ihren Elektroden von aussen zugänglich sind, so dass die dielektrische Flüssigkeit, in welche der Sensor eintaucht, als Dielektrikum von variabler Höhe in die Spalte eindringen kann. Die Neigungsmessung ist im wesentlichen unabhängig vom Füllstand, weil es sich bei der Neigungsmessung um eine Differentialmessung handelt, in welcher es lediglich auf den Unterschied des Füllstands in nebeneinanderliegenden Kondensatoren ankommt.

Die Füllstandsmessung wird so durchgeführt, dass man mit der Neigungsmessung abwechselnd den Referenzkondensator und wenigstens einen der für die Neigungsmessung vorgesehenen Kondensatoren, vorzugsweise eine Parallelschaltung aller für die Neigungsmessung vorgesehenen Kondensatoren, auf die Meßschaltung, z.B. die Meßbrücke schaltet und das dann erhaltene, auf den Referenzkondensator bezogene Füllstandssignal korrigiert mit dem zuletzt gewonnenen Neigungssignal.

Gestalt und Anordnung der Elektroden der Kondensatoren sind in weiten Grenzen beliebig. Besonders kompakt wird der erfindungsgemässe Kondensator dann, wenn man ihn so aufbaut, dass die verschiedenen Kondensatoren eine Elektrode gemeinsam haben, welcher die anderen Elektroden gegenüberliegen. Besonders günstig ist ein Sensor, in welchem die gemeinsame Elektrode innen liegt und von den anderen Elektroden umgeben ist, insbesondere in zylindrischer Geometrie, aber auch in einer im Querschnitt quadratischen Geometrie.

Zur weiteren Erläuterung der Erfindung dienen die beigefügten schematischen Zeichnungen.

Figur 1    zeigt die Anordnung eines erfindungsgemässen Neigungs- und Füllstandssensors mit gemeinsamer Aussenelektrode auf dem Boden der Ölkammer eines Antriebsaggregates,

Figur 2    zeigt als Detail eine abgewandelte Elektrodenform,

Figur 3    zeigt ein Ersatzschaltbild des Sensors in seiner Beschaltung als Füllstandssensor, eingefügt in eine Wechselspannungsmeßbrücke,

Figur 4    zeigt ein Ausführungsbeispiel eines erfindungsgemässen Sensors in einer teilweise aufgeschnittenen Schrägansicht, und zwar in Abwandlung zum Ausführungsbeispiel in Figur 1 mit gemeinsamer Innenelektrode statt mit gemeinsamer Aussenelektrode,

Figur 5    ist ein Ersatzschaltbild des Sensors aus Figur 4,

Figur 6    zeigt anhand des Ersatzschaltbildes aus Figur 5 die Elektrodenbeschaltung bei Neigungsmessung in X-Richtung,

Figur 7    zeigt anhand des Ersatzschaltbildes aus Figur 5 die Elektrodenbeschaltung bei Neigungsmessung in Y-Richtung,

Figur 8    zeigt anhand des Ersatzschaltbildes aus Figur 5 die Elektrodenbeschaltung des Sensors bei Füllstandsmessung, und

Figur 9    zeigt ein Ersatzschaltbild des Sensors in seiner Beschaltung als Füllstandssensor mit einer aus der Wechselspannungsquelle gebildeten Referenzspannung.

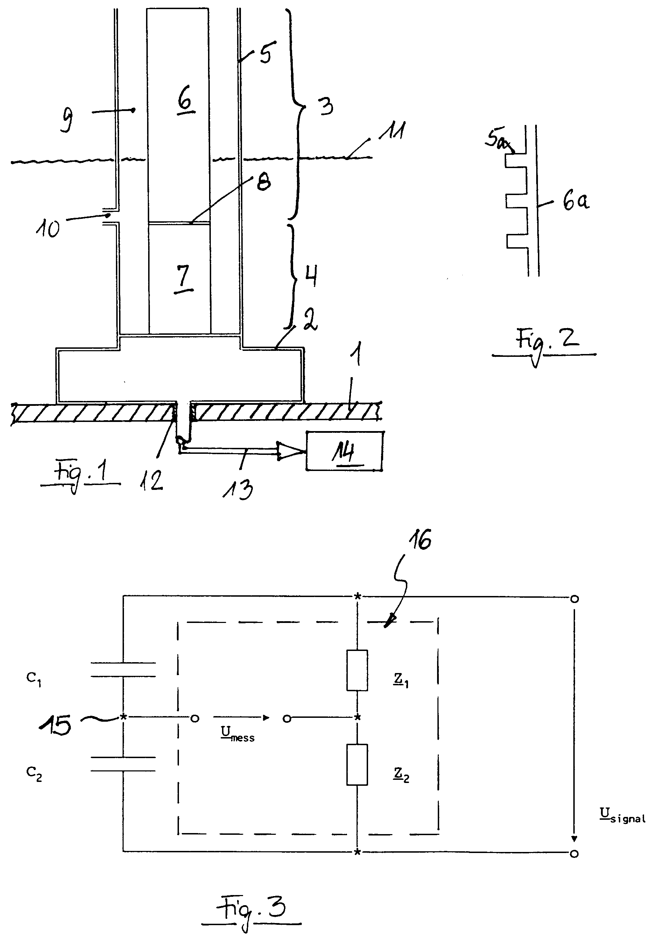

Figur 1 zeigt eine auf dem Boden 1 einer Ölkammer eines Antriebsaggregates, beispielsweise auf dem Boden einer Ölwanne angeordnete Sensoreinheit bestehend aus einem Gehäuse 2 am Fuß der Sensoreinheit und zwei hierauf übereinander angeordneten zylindrischen Kondensatoren 3 und 4 mit einer gemeinsamen Aussenelektrode 5. Die beiden übereinander angeordneten Innenelektroden 6 und 7 sind durch einen Isolator 8 miteinander verbunden.

Die Sensoranordnung ist an der Unterseite durch das Gehäuse 2 verschlossen und am gegenüberliegenden oberen Ende offen, so dass von dort Öl in den von Abstandhaltern freien Ringraum 9 eindringen kann, und in der Höhe des Isolators 8 befindet sich eine weitere Öleintrittsöffnung 10, so dass das Niveau 11 des Öls auch nach einem Absinken des Ölstandes in der Ölkammer innerhalb und ausserhalb des Ringraums 9 gleich ist, solange der Ölstand in der Ölkammer nicht unter die Eintrittsöffnung 10 absinkt. Auf diese Weise ist sichergestellt, dass der Kondensator 4 stets bis zum Rand gefüllt ist.

Vom Gehäuse 2 führt durch eine abgedichtete Öffnung 12 ein elektrisches Kabel 13 zu einer im Fahrzeug untergebrachten Auswerteelektronik 14. Im Gehäuse 2 befindet sich eine nicht näher dargestellte Elektronik zur Meßsignalaufbereitung, so dass parasitäre Zuleitungskapazitäten minimal gehalten werden.

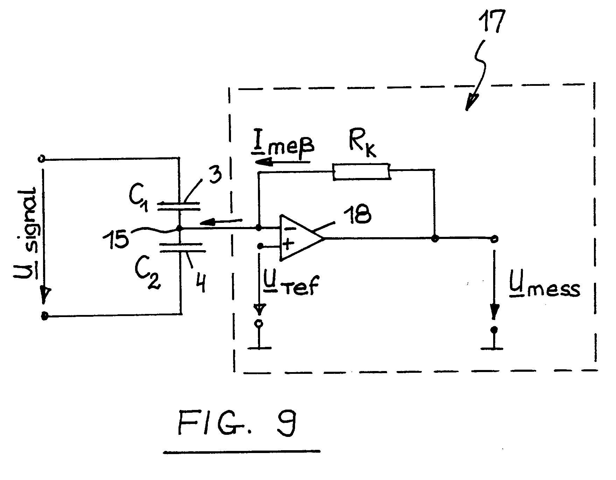

Eine Änderung des Verhältnisses der Kapazitäten $C_1$ und $C_2$ der Kondensatoren 3 und 4 kann durch eine Meßschaltung 16 (Figur 3) bzw. 17 (Figur 9) erfaßt werden. Die Elektronik zur Meßsignalaufbereitung kann die Meßspannung einer Wechselstrommeßbrücke auswerten, wie sie in Figur 3 dargestellt ist. Die Meßbrücke hat in ihrem einen Zweig zwei bekannte Impedanzen $\underline{Z}_1$, $\underline{Z}_2$ und in ihrem anderen Zweig die Kapazitäten $C_1$ des ersten Kondensators 3 und $C_2$ des zweiten Kondensators 4, die einen kapazitiven Spannungsteiler mit einem zwischen ihnen liegenden Abgriff 15 bilden.

Die Endpunkte der einen Brückendiagonale sind mit einer Wechselspannungsquelle verbunden, die eine Wechselspannung mit gleichbleibender Amplitude $\hat{U}_{signal}$ liefert. An den Endpunkten der anderen Brückendiagonale wird eine Meßspannung abgegriffen, deren Amplitude $\hat{U}_{mess}$ vom Niveau 11 des Öls im ersten Kondensator 3 abhängt. Die Höhe der Meßspannung ist unabhängig von der Temperatur und Zusammensetzung des Öls, weil deren Einfluß durch den ständig mit Öl gefüllten Referenzkondensator 4 kompensiert wird. Schwankungen des Ölstandes durch den Fahrbetrieb können beispielsweise durch die in Figur 2 dargestellte Elektrodengeometrie gedämpft werden, bei welcher die Innenelektrode 6a zylindrisch ist und die Aussenelektrode 5a ein Rechteck-Gewindeprofil mit geringer Steigung hat.

Der in Figur 1 dargestellte Sensor kann typisch so dimensioniert werden:

| | |
|---|---|
| Innendurchmesser der Aussenelektroden 5 | 40 mm |
| Aussendurchmesser der Innenelektroden 6 und 7 | 38 mm |
| Länge der Innenelektrode 6 | 35 mm |
| Länge der Innenelektrode 7 | 60 mm |

Damit kann die in Figur 3 dargestellte Schaltung typisch wie folgt dimensioniert werden:

$\underline{Z}_1$ = 5,1 kΩ

$\underline{Z}_2$ = 10 kΩ

$\hat{U}_{signal}$ = 5 V

Signal-Frequenz = 100 kHz

Der dargestellte Sensor kann jeden Ölstand zwischen der Öleintrittsöffnung 10 und dem oberen Ende des ersten Kondensators 3 anzeigen. Das an der Brückenschaltung im Diagonalabgriff gewonnene Meßsignal $\underline{U}_{mess}$ wird nach Auswertung der Amplituden und/oder Phaseninformation in ein ölstandsmoduliertes Ausgangssignal aufbereitet, z.B. in ein pulsbreitenmoduliertes Signal umgewandelt, das dann einer weiteren Auswerteelektronik zugeführt und angezeigt werden kann. Die Anzeige kann in an sich bekannter Weise mit einem Zeigerinstrument erfolgen, vorteilhafterweise auch mit einer senkrechten Reihe von Leuchtdioden, wobei der Normalbereich zwischen einem oberen und einem unteren Grenzwert zweckmässigerweise durch grüne Leuchtdioden symbolisiert wird, der Gefahrbereich für zu hohen oder zu tiefen Ölstand durch rote Leuchtdioden.

Um den Einfluß von Neigungen berücksichtigen zu können, besteht die Innenelektrode 6 des Kondensators 3 aus vier gleichen, sich über die volle Länge des Zylinders erstreckenden, getrennten Oberflächenabschnitten, welche sich jeweils über etwas weniger als 90° in Umfangsrichtung des Zylinders erstrecken. Die dadurch in Verbindung mit der Aussenelektrode 5 gebildeten vier Teilkondensatoren werden für Zwecke der Füllstandsmessung parallel zusammengeschaltet, für Zwecke der Neigungsmessung jedoch getrennt, wie es anhand der Figuren 4 bis 8 erläutert wird. Dabei ist es für die Art und Weise der Beschaltung unerheblich, ob die gemeinsame Elektrode die Aussenelektrode ist (wie in Figur 1) oder die Innenelektrode (wie in Figur 4).

Der in Figur 4 dargestellte Sensor hat eine prismatische Innenelektrode 20 mit quadratischem Querschnitt, welcher zur Bildung von fünf Kondensatoren vier Elektroden 21 bis 25 gegenüberliegen. Die Elektroden 21 bis 24 sind ebene Platten und umgeben den oberen Abschnitt der inneren Elektrode 20 unter Bildung von Spalten 26 bis 29. Die vier Platten 21 bis 24 können Teile eines längsgeschlitzten Rechteckprofils sein. Der untere Abschnitt der Innenelektrode 20 ist von einer Aussenelektrode 25 in Gestalt eines Rechteckprofils umgeben. Der Spalt 30 zwischen der Innenelektrode 20 und der unteren Aussenelektrode 25 ist nach unten hin verschlossen. Zwischen der unteren Elektrode 25 und den oberen Elektroden 21 bis 24 besteht ein Ringspalt 31, durch die die dielektrische Flüssigkeit einerseits in den Spalt 30 eindringen und ihn ausfüllen kann und andererseits in den Spalten 26 bis 29 hochsteigen kann.

Das Ersatzschaltbild der so gebildeten fünf Kondensatoren ist in Figur 5 dargestellt. Die aus den Elektroden 20 und 21 sowie 20 und 22 gebildeten Kondensatoren bilden eine erste Gruppe, mit welcher die Neigung in X-Richtung festgestellt werden kann. Die aus den Elektroden 20 und 23 sowie 20 und 24 gebildeten Kondensatoren bilden eine zweite Gruppe, mit welcher die Neigung in Y-Richtung bestimmt werden kann. Der aus den Elektroden 20 und 25 gebildete Kondensator schließlich dient als Referenzkondensator für die Bestimmung des Niveaus der elektrolytischen Flüssigkeit, in welche der Sensor eintaucht, insbesondere von Öl.

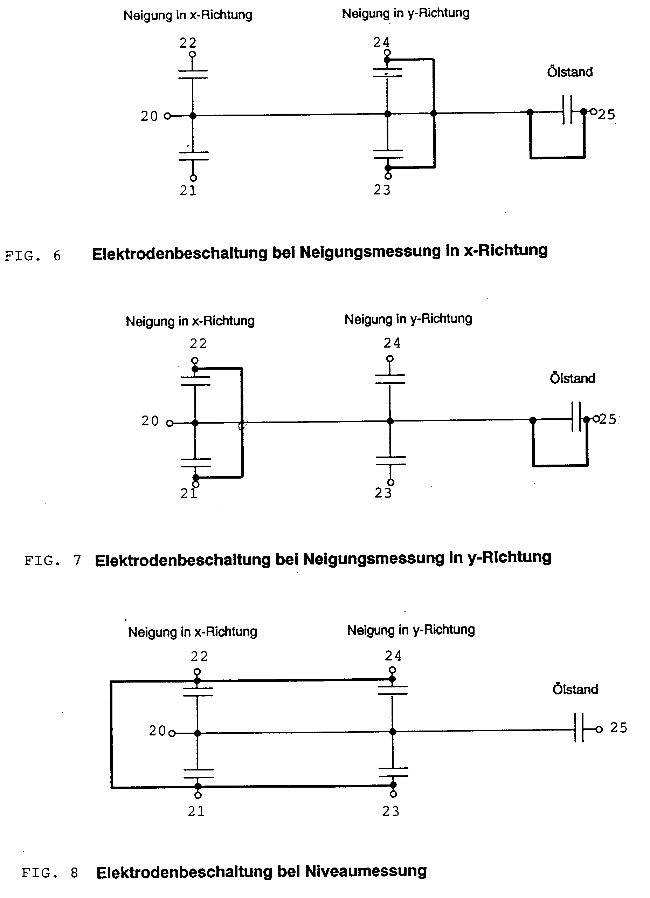

Um die Neigung in X-Richtung zu bestimmen, genügt es, die durch die Elektroden 20 und 23, 20 und 24 sowie 20 und 25 gebildeten Kondensatoren unwirksam zu machen, indem ihre Elektroden sämtlich auf das gleiche Potential gelegt, die drei Kondensatoren also kurzgeschlossen werden (Figur 6). Die Neigung in Y-Richtung kann bestimmt werden, indem man die durch die Elektroden 20 und 21, 20 und 22 sowie 20 und 25 gebildeten Kondensatoren auf das gleiche Potential legt (Figur 7). Eine Neigung in beliebiger Richtung kann bestimmt werden, in dem man den durch die Elektroden 20 und 25 gebildeten Kondensator kurzschließt und über eine Wechselspannungsquelle, die vier um 90° phasenverschobene, amplitudengleiche Ausgangsspannungen liefert, die Aussenelektroden 21, 22, 23 und 24 so ansteuert, dass die Elektroden 21 und 22 mit einem Gegentaktsignal beaufschlagt werden, die Elektroden 23 und 24 ebenso mit einem Gegentaktsignal beaufschlagt werden und die beiden Gegentaktsignale zueinander einen Phasenversatz von 90° aufweisen, wie in der nachstehenden Tabelle angegeben.

| Betriebsart Elektrode | Ansteuerung | Ansteuerung Niveau |
|---|---|---|
| 21 | $\hat{U}\cdot\sin\omega t$ | $\hat{U}\cdot\sin\omega t$ |
| 22 | $\hat{U}\cdot\sin(\omega t + 180°)$ $= -\hat{U}\sin\omega t$ | $\hat{U}\sin\omega t$ |
| 23 | $\hat{U}\cdot\sin(\omega t + 90°)$ $= -\hat{U}\cos\omega t$ | $\hat{U}\cdot\sin\omega t$ |
| 24 | $\hat{U}\cdot\sin(\omega t + 270°)$ $= \hat{U}\cdot\cos\omega t$ | $\hat{U}\cdot\sin\omega t$ |
| 25 | REF | $\hat{U}\sin(\omega t + 180°)$ $= -\hat{U}\cdot\sin\omega t$ |

Dadurch entsteht ein zirkular rotierender elektrischer Spannungsvektor, der bei einer Neigung des Sensors gegen eine beliebige Richtung in der X-Y-Ebene zu einer Verstimmung des Differentialsystems und damit zu einem auswertbaren Signal führt.

Zur Niveaumessung werden die durch die Elektroden 20 und 21, 20 und 22, 20 und 23 sowie 20 und 24 gebildeten Kondensatoren parallel geschaltet und bilden gemeinsam eine Meßkapazität (entsprechend $C_1$ in Figur 3), wohingegen der durch die Elektroden 20 und 25 gebildete Kondensator eine Referenzkapazi-

tät bildet, entsprechend $C_2$ in Figur 3.

Bei der Neigungsmessung mit den Elektrodenbeschaltungen wie in Figur 6 und Figur 7 liegen die nicht kurzgeschlossenen Kondensatoren in der Meßbrücke, entsprechend den Kapazitäten $C_1$ und $C_2$ in Figur 3.

Der Füllstandsbereich, der angezeigt werden kann, ist durch die Länge der Elektroden 21 bis 24 begrenzt. Durch die Anordnung des Referenzkondensators (20, 25) unterhalb des Ringspalts 31 ist sichergestellt, dass im vorgesehenen Meßbereich der Referenzkondensator stets vollständig mit der dielektrischen Flüssigkeit gefüllt ist, so dass Temperatur- und Alterungseinflüsse keinen Einfluß auf das Meßergebnis haben.

Alternativ zu Figur 3 kann gemäss Figur 9 mit dem Abgriff 15 auch eine Meßschaltung 17 verbunden sein, die den Verschiebestrom zwischen den Kondensatoren 3 und 4 kompensiert und mißt, der auftritt, wenn die Kondensatoren 3, 4 aus der Wechselspannungsquelle $\underline{U}_{signal}$ mit zwei 180° phasenverschobenen Signalen (z.B. sinus- oder dreieckförmig) im Gegentakt beaufschlagt werden. Mit dem Abgriff 15 ist der invertierende Eingang eines Operationsverstärkers 18 verbunden, dessen Ausgang über einen ohm'schen Widerstand $R_K$ mit dem invertierenden Eingang rückgekoppelt ist. Der nicht invertierende Eingang des Operationsverstärkers 18 erhält eine aus der Wechselspannungsquelle gebildete Referenzspannung $\underline{U}_{ref}$. Da auch der invertierende Eingang auf der Referenzspannung $\underline{U}_{ref}$ gehalten wird, fließt über den Rückkoppelwiderstand $R_K$ ein Strom $\underline{I}_{mess}$ in den kapazitiven Spannungsteiler und kompensiert den Verschiebestrom zwischen den Kondensatoren 3 und 4. Die Ausgangsspannung $\underline{U}_{mess}$ des Operationsverstärkers 18 ist ein Maß für den Kompensationsstrom $\underline{I}_{mess}$ und damit direkt ein Maß für die den kapazitiven Spannungsteiler verstimmende Größe (Neigung oder Niveau).

**Patentansprüche**

1. Neigungssensor,
   **gekennzeichnet durch**
   eine Wechselspannungsquelle ($\underline{U}_{signal}$), die eine Spannung mit vorgegebener Amplitude $\hat{U}$ liefert,
   mit zwei Kondensatoren ($C_1$, $C_2$; 20/21, 20/22, 20/23, 20/24), die zur Bildung eines kapazitiven Spannungsteilers mit der Wechselspannungsquelle ($\underline{U}_{signal}$) elektrisch in Reihe verbunden sind und an einem zwischen ihnen liegenden Verbindungspunkt (15) einen elektrischen Abgriff haben, der zum Anschließen einer Meßschaltung (16, 17) zur Ermittlung einer Änderung des Teilverhältnisses der beiden Kondensatoren dient,
   wobei die beiden Kondensatoren ($C_1$, $C_2$; 20/21, 20/22, 20/23, 20/24) durch zwei Paare (20/21, 20/22, 20/23, 20/24) von Elektroden gebildet sind, deren Relativlage fest vorgegeben ist, in jedem Paar (20/21, 20/22, 20/23, 20/24) ein Spalt (26, 27; 28, 29) zwischen den Elektroden (20/21, 20/22, 20/23, 20/24) vorgesehen ist, in welchem sich eine dielektrische Flüssigkeit befindet, und die Spalte (26, 27; 28, 29) nach dem Prinzip kommunizierender Röhren miteinander verbunden sind.

2. Neigungssensor nach Anspruch 1, **dadurch gekennzeichnet**, dass die Meßschaltung (16) zwei bekannte Impedanzen ($\underline{Z}_1$, $\underline{Z}_2$) enthält, welche die Reihenschaltung der Kondensatoren ($C_1$, $C_2$; 20/21, 20/22, 20/23, 20/24) zu einer Wechselspannungsmeßbrücke ergänzen, in deren einem Zweig die beiden Kondensatoren (3, 4) liegen, in deren anderem Zweig die beiden bekannten Impedanzen liegen, wobei die Enden der beiden Zweige mit der Wechselspannungsquelle ($\underline{U}_{signal}$) verbunden sind und in der die beiden Zweige überbrückenden Brückendiagonale ein Spannungsaufnehmer ($\underline{U}_{mess}$) liegt.

3. Neigungssensor nach Anspruch 1, **dadurch gekennzeichnet**, dass die Meßschaltung (17) eine den Verschiebestrom zwischen den beiden Kondensatoren ($C_1$, $C_2$; 20/21, 20/22, 20/23, 20/24) messende Strommeßschaltung ist.

4. Neigungssensor nach Anspruch 3, **dadurch gekennzeichnet**, dass die Meßschaltung (17) eine Kompensationsschaltung ist, welche den Verschiebestrom kompensiert.

5. Neigungssensor nach Anspruch 4, **dadurch gekennzeichnet**, dass die Meßschaltung (17) einen Operationsverstärker (18) mit einem invertierenden und einem nicht invertierenden Eingang enthält, wobei der nichtinvertierende Eingang mit einer festen Referenzspannungsquelle ($\underline{U}_{ref}$) und der invertierende Eingang mit dem Verbindungspunkt (15) zwischen den Kondensatoren verbunden ist und der Ausgang des Operationsverstärkers (18) durch einen ohm'schen Widerstand (R) mit dem invertierenden Eingang rückgekoppelt ist.

**6.** Neigungssensor nach einem der vorstehendenen Ansprüche, **dadurch gekennzeichnet**, das die Elektroden (20/21, 20/22, 20/23, 20/24) gleich und parallel zueinander angeordnet sind.

**7.** Neigungssensor nach einem der vorstehenden Ansprüche, **dadurch gekennzeichnet**, dass zur zweidimensionalen Neigungsmessung zwei unterschiedlich ausgerichtete Gruppen von je zwei Elektrodenpaaren (20/21, 20/22, 20/23, 20/24) vorgesehen sind, deren Relativlage zueinander fest vorgegeben ist.

**8.** Neigungssensor nach Anspruch 7, **dadurch gekennzeichnet**, dass die beiden Gruppen von Elektrodenpaaren (20/21, 20/22, 20/23, 20/24) alternativ mit der Meßschaltung (16, 17) zusammenschaltbar sind.

**9.** Neigungssensor nach Anspruch 7 oder 8**, dadurch gekennzeichnet**, dass die beiden Gruppen (20/21, 20/22, 20/23, 20/24) in zueinander rechtwinkliger Orientierung angeordnet sind.

**10.** Neigungssensor nach Anspruch 7, 8 oder 9, **dadurch gekennzeichnet**, dass alle vier Elektrodenspalte (26, 27; 28, 29) nach dem Prinzip kommunizierender Röhren untereinander verbunden sind.

**11.** Neigungssensor nach einem der vorstehenden Ansprüche, **dadurch gekennzeichnet**, dass die Spalte (26, 27; 28, 29) zwischen den Elektroden nach aussen offen sind.

**12.** Neigungssensor nach einem der vorstehenden Ansprüche, **dadurch gekennzeichnet**, dass die Kondensatoren (20/21, 20/22, 20/23, 20/24) eine Elektrode (20) mit einer Umfangsfläche gemeinsam haben, welcher die anderen Elektroden 21 bis 24) unter Bildung der Spalte (26 bis 29) über den Umfang verteilt gegenüberliegen.

**13.** Neigungssensor nach Anspruch 12, **dadurch gekennzeichnet**, dass die gemeinsame Elektrode (20) innen liegt und von den anderen Elektroden (21 bis 24) umgeben ist.

**14.** Neigungssensor nach Anspruch 12 oder 13, **dadurch gekennzeichnet**, dass die gemeinsame Elektrode zylindrisch ist, während die anderen Elektroden teilzylindrisch sind.

**15.** Neigungssensor nach Anspruch 12 oder 13, **dadurch gekennzeichnet**, dass die gemeinsame Elektrode (20) im Querschnitt quadratisch ist, während die anderen Elektroden (21 bis 24) eben sind.

**16.** Neigungssensor nach einem der Ansprüche 11 bis 15, **dadurch gekennzeichnet**, dass zusätzlich zu den für die Neigungsmessung vorgesehenen Kondensatoren (20/21, 20/22, 20/23, 20/24) unterhalb von diesen ein weiterer offener Kondensator (20/25) vorgesehen ist, der als Referenzkapazität ($C_2$) mit der Meßschaltung (16, 17) zusammenschaltbar, insbesondere in die Meßbrücke schaltbar ist.

**17.** Neigungssensor nach Anspruch 16**, dadurch gekennzeichnet**, dass der Spalt (30) des weiteren Kondensators (20/25) nur nach oben offen ist.

**18.** Neigungssensor nach einem der Ansprüche 16 oder 17, **dadurch gekennzeichnet**, dass die für die Neigungsmessung vorgesehenen Kondensatoren (20/21, 20/22, 20/23, 20/24) parallel zusammenschaltbar sind.

**19.** Neigungssensor nach einem der vorstehenden Ansprüche, **dadurch gekennzeichnet**, dass in die Spalte (26-29) Schikanen (5a) eingebaut sind, die einen Niveauausgleich verlangsamen.

**20.** Neigungssensor nach einem der vorstehenden Ansprüche, **dadurch gekennzeichnet**, dass er einen Fuß (2) unmittelbar unter den Elektroden (20 bis 25) hat, in welchem sich die Meßschaltung (16, 17), insbesondere der Spannungsaufnehmer ($\underline{U}_{mess}$) und eine Signalaufbereitungsschaltung befinden.

**21.** Neigungssensor nach einem der vorstehenden Ansprüche in Verbindung mit Anspruch 7, **dadurch gekennzeichnet**, dass eine Wechselspannungsquelle ($\underline{U}_{signal}$), welche vier um 90° phasenverschobene Wechselspannungssignale mit gleicher Amplitude $\hat{U}$ liefert, vorgesehen und so mit den Kondensatoren (20/21, 20/22, 20/23, 20/24) verbunden ist, dass die beiden einer Gruppe angehörenden Kondensatoren (20/21, 20/22, 20/23, 20/24) im Gegentakt betrieben werden.

9 → 6  5

10  11  3

8  7  4  2

1  14

Fig.1  12  13

Fig.2

5a  6a

Fig.3

16

C₁  Z₁

15  U_mess

C₂  Z₂

U_signal

FIG. 4  **Sensoranordnung zur Neigungs- und Niveaumessung**

Neigung in x-Richtung     Neigung in y-Richtung

22          24          Ölstand

20          25

21          23

FIG. 5  **Ersatzschaltbild des Sensors nach** FIG. 4

Neigung in x-Richtung    Neigung in y-Richtung

22    24    Ölstand

20    25

21    23

FIG. 6    **Elektrodenbeschaltung bei Neigungsmessung in x-Richtung**

Neigung in x-Richtung    Neigung in y-Richtung

22    24    Ölstand

20    25

21    23

FIG. 7    **Elektrodenbeschaltung bei Neigungsmessung in y-Richtung**

Neigung in x-Richtung    Neigung in y-Richtung

22    24    Ölstand

20    25

21    23

FIG. 8    **Elektrodenbeschaltung bei Niveaumessung**

EP 0 585 910 A2

FIG. 9

14